# EUROPEAN PATENT APPLICATION

(11) **EP 2 277 830 A1**
(43) Date of publication of application: **26.01.2011**
(21) Application number: 09721302.9
(22) Date of filing: 16.03.2009
(51) Int. Cl.: C01B 31/02

(54) **METHOD FOR MANUFACTURING CARBON NANOTUBE**

(30) Priority: 17.03.2008 JP 2008067721
(71) Applicant: Otsuka Chemical Holdings Co., Ltd., Osaka-shi, Osaka 540-0021 (JP)
(72) Inventor: GOTO, Toshiki, Tokushima-shi Tokushima 771-0193 (JP); TANI, Masato, Tokushima-shi Tokushima 771-0193 (JP)
(74) Representative: Hollatz, Christian
(86) International application number: PCT/JP2009/001160
(87) International publication number: WO 2009/116261

(57) **Abstract**

To efficiently and easily manufacture carbon nanotubes oriented in one direction. A method for manufacturing carbon nanotubes is **characterized by** including the steps of: bringing crystalline metal oxide particles into contact with a solution containing metal ions serving as a catalyst for forming carbon nanotubes, thereby attaching the catalyst to the surfaces of the metal oxide particles; subjecting the surfaces of the metal oxide particles to which the catalyst is attached to a CVD method or a combustion method, thereby forming carbon nanotubes on the surface of each of the metal oxide particles and resulting in producing metal oxide particles each supporting carbon nanotubes grown substantially perpendicularly to the surface of the metal oxide particle and in parallel with each other; and removing metal oxide particles from the metal oxide particles supporting carbon nanotubes.

## Description

### TECHNICAL FIELD

This invention relates to a method for manufacturing carbon nanotubes and carbon nanotubes manufactured by the method.

### BACKGROUND ART

Considerable research and development has been conducted in recent years on carbon nanotubes. There is known, as a method for mass-producing carbon nanotubes, a method in which carbon nanotubes are formed and grown by a CVD (chemical vapor deposition) method on a substrate on which a metal catalyst is supported (see for example Patent Document 1). According to such a method, carbon nanotubes oriented in one direction can be efficiently manufactured.

However, in order to separate carbon nanotubes grown in such a manner from the substrate, it is necessary to use a method of grasping the carbon nanotubes with tweezers and peeling them off from the substrate or a method of cutting off the carbon nanotubes from the substrate with a blade, such as a cutter blade. A problem thus arises in that the manufacturing process of carbon nanotubes becomes complicated.
Patent Document 1: Published Japanese Patent Application No. 2007-182352

### DISCLOSURE OF THE INVENTION

An object of the present invention is to provide a method for manufacturing carbon nanotubes capable of efficiently and easily manufacturing carbon nanotubes oriented in one direction and provide carbon nanotubes manufactured by the method.

A method for manufacturing carbon nanotubes according to the present invention is characterized by including the steps of: bringing crystalline metal oxide particles into contact with a solution containing metal ions serving as a catalyst for forming carbon nanotubes, thereby attaching the catalyst to the surfaces of the metal oxide particles; subjecting the surfaces of the metal oxide particles to which the catalyst is attached to a CVD method or a combustion method, thereby forming carbon nanotubes on the surface of each of the metal oxide particles and resulting in producing metal oxide particles each supporting carbon nanotubes grown substantially perpendicularly to the surface of the metal oxide particle and in parallel with each other; and removing metal oxide particles from the metal oxide particles supporting carbon nanotubes.

In the present invention, carbon nanotubes are manufactured by subjecting the surfaces of metal oxide particles to which a catalyst is attached to a CVD method or a combustion method, thereby forming carbon nanotubes on the surface of each of the metal oxide particles and resulting in producing metal oxide particles each supporting carbon nanotubes grown substantially perpendicularly to the surface of the metal oxide particle and in parallel with each other, and removing metal oxide particles from the metal oxide particles supporting carbon nanotubes. Therefore, carbon nanotubes oriented in one direction can be efficiently and easily manufactured.

A method of removing the metal oxide particles can be selected from various methods according to the kind of metal oxide particles used. For example, if the metal oxide particles are made of an alkaline earth metal silicate, an alkaline earth metal titanate or an alkali titanate, examples of the above method include an acidic treatment and an alkaline treatment. An example of the alkaline earth metal silicate is wollastonite.

For example, by subjecting the metal oxide particles supporting carbon nanotubes to an acidic treatment or an alkaline treatment, the metal oxide particles can be removed, whereby carbon nanotubes can be easily manufactured.

In the present invention, carbon nanotubes can be formed by a CVD method or a combustion method. An example of the combustion method is a method in which the metal oxide particles to which the catalyst is attached are heated to 500°C to 1000°C and the heated metal oxide particles are brought into contact with hydrocarbon and/or carbon monoxide. In this combustion method, it is preferable that the metal oxide particles be heated by the combustion of hydrocarbon or carbon monoxide and oxygen-containing gas and concurrently brought into contact with hydrocarbon and/or carbon monoxide, whereby carbon nanotubes are formed and grown on the surfaces of the metal oxide particles.

Furthermore, according to the present invention, the carbon nanotubes can be grown in a plate-like aggregate. Therefore, the carbon nanotubes can be manufactured in a plate-like aggregate. The length of the carbon nanotubes in a direction of growth can be within the range from 1 to 1000 µm, for example. The thickness of the plate-like aggregate of carbon nanotubes can be within the range from 0.1 to 50 µm.

The ratio of the length of the plate-like aggregate of carbon nanotubes in the direction of growth to the thickness thereof can be within the range from 5 to 5000.

In the manufacturing method according to the present invention, the solution containing metal ions serving as a catalyst for forming carbon nanotubes preferably contains at least one element of Cr, Mn, Fe, Co, Ni, Cu, Zn, In, Sn, Al and Pt and elemental Mo, and the at least one element of Cr, Mn, Fe, Co, Ni, Cu, Zn, In, Sn, Al and Pt is preferably contained in the solution within the range from 0.1 to 1000 moles per mole of elemental Mo. If the content of the at least one element is less than 0.1 moles, carbon nanotubes can be manufactured but may be less economically efficient. If the content of the at least one element is over 1000 moles, the amount of carbon nanotubes supported on each metal oxide particle becomes significantly small and the regularity may be much reduced.

In the manufacturing method according to the present invention, the obtained carbon nanotubes can be subjected to a heat treatment at a temperature within the range from 1000°C to 3200°C. Examples of the heating method include heating using a carbon resistance furnace, and direct heating, such as microwave heating and electromagnetic induction heating. The application of such a heat treatment enables a reduction of impurities contained in the carbon nanotubes manufactured by the method according to the present invention, such as calcium (Ca), silicon (Si), iron (Fe), nickel (Ni) and molybdenum (Mo). The more preferred temperature range for the heat treatment is from 2000°C to 3000°C. The heat treatment time is one minute to 240 hours, for example. If the heat treatment temperature is too low, the effect of reducing impurities may not sufficiently be obtained. If the heat treatment temperature is too high, carbon may be sublimed. Furthermore, such a high heat treatment temperature is not desirable also in view of energy efficiency and production cost.

Carbon nanotubes according to the present invention are characterized by being manufactured by the above manufacturing method according to the present invention.

The carbon nanotubes manufactured by the manufacturing method of the present invention are those oriented in one direction and are obtained as an aggregate of carbon nanotubes oriented in one direction, which makes the carbon nanotubes easy to handle as powder. In addition, the carbon nanotubes have a low bulk specific gravity and can therefore be easily compounded into resin or paint.

Moreover, the carbon nanotubes of the present invention can be used, for example, as an electrode for batteries or capacitors, a conductive aid for electrodes or the like, or a catalyst support or gas diffusion layer in fuel cells.

### (Effects of the Invention)

According to the present invention, carbon nanotubes oriented in one direction can be efficiently and easily manufactured.

### BRIEF DESCRIPTION OF THE DRAWINGS

[FIG. 1] FIG. 1 is a schematic view showing a manufacturing apparatus for a combustion method used to produce wollastonite supporting carbon nanotubes in an example according to the present invention.
[FIG. 2] FIG. 2 is a scanning electron micrograph (a) and a transmission electron micrograph (b) both showing wollastonite supporting carbon nanotubes obtained in the example according to the present invention.
[FIG. 3] FIG. 3 is a chart of thermogravimetric/differential thermal analysis measurement of wollastonite supporting carbon nanotubes obtained in the example according to the present invention.
[FIG. 4] FIG. 4 is a scanning electron micrograph showing carbon nanotubes obtained by removing wollastonite from wollastonite supporting carbon nanotubes in the example according to the present invention.
[FIG. 5] FIG. 5 is a scanning electron micrograph showing carbon nanotubes obtained by removing wollastonite from wollastonite supporting carbon nanotubes in the example according to the present invention.
[FIG. 6] FIG. 6 is a chart of thermogravimetric analysis measurement of carbon nanotubes obtained in the example according to the present invention.
[FIG. 7] FIG. 7 is a chart of thermogravimetric analysis measurement of carbon nanotubes subjected to heat treatments in the example according to the present invention.
[FIG. 8] FIG. 8 is a scanning electron micrograph showing carbon nanotubes obtained in the example according to the present invention and before any heat treatment.
[FIG. 9] FIG. 9 is a scanning electron micrograph showing carbon nanotubes obtained in the example according to the present invention and after being subjected to a heat treatment.

### LIST OF REFERENCE NUMERALS

1 stainless steel mesh container
2, 3 stainless steel plate having holes formed therein
4 burner
5 flame
6 stainless steel tube

### BEST MODE FOR CARRYING OUT THE INVENTION

Examples of crystalline metal oxide particles used in the present invention include alkaline earth metal silicates, alkaline earth metal titanates and alkali titanates. Particularly, fibrous or platy crystalline metal oxide particles are preferable. Examples of fibrous or platy alkaline earth metal silicates include calcium silicate, magnesium silicate, magnesium-aluminum silicate, strontium silicate and barium silicate. Examples of fibrous or platy alkaline earth metal titanates include magnesium titanate, calcium titanate, strontium titanate and barium titanate. Examples of fibrous or platy alkali titanates include potassium titanate, sodium titanate, lithium titanate and cesium titanate.

The particle size of crystalline metal oxide particles is not particularly limited, but examples of fibrous particles include those having a fiber diameter of 50 nm to 10 µm and a fiber length of 1 µm to 1000 µm. Examples of platy particles include those having an average particle size of 1 µm to 1000 µm and a thickness of 50 nm to 100 µm.

Catalysts that can be used to be supported on the surfaces of the metal oxide particles include compounds containing Mo and at least one element of Cr, Mn, Fe, Co, Ni, Cu, Zn, In, Sn, Al and Pt, including for example elemental substances, oxides, hydroxides and carbides of these metals. Among them, oxides and hydroxides of Mo and at least one of Fe, Ni and Co are excellent catalysts which can be easily supported, whereby carbon nanotubes can be efficiently formed on the surfaces of the metal oxide particles.

Examples of a method of supporting the catalyst on the surfaces of the metal oxide particles include sputtering, vacuum deposition, CVD and plating. The most convenient and practical method is a method of immersing the metal oxide particles into a solution of the catalytic metal compound.

The catalytic metal can be supported by simply immersing metal oxide particles into such a solution, separating them from the solution, and drying or firing them. However, one method that can support the catalytic metal with higher certainty is, if the metal oxide particles contain an alkali metal element or an alkaline earth metal element, a method of immersing the particles into a solution of the catalyst compound to substitute the alkali metal or alkaline earth metal element with the catalytic metal, thereby efficiently immobilizing the catalytic metal on the surfaces of the particles. During the immersion, the solution of the catalyst compound may be heated. Furthermore, in order that the metal compound functions as a catalyst to form carbon nanotubes, the metal compound must be supported in the form of very fine particles. Effective for this purpose is a method of immersing the metal oxide particles into a colloidal sol prepared using hydrolysis or the like of the catalytic metal compound. For example, wollastonite is immersed into an aqueous solution of nickel nitrate and ammonium molybdate to support a nickel-molybdenum catalyst on wollastonite. In this case, Ca on the surface of wollastonite is substituted with nickel ions and molybdate ions in the solution, whereby these ions are supported on wollastonite.

Alternatively, a catalyst of very fine iron oxide particles can be supported on metal oxide particles by adding dropwise an aqueous solution of iron chloride and ammonium molybdate to boiling water to prepare a sol of very fine particles of iron hydroxide or iron oxide and molybdenum hydroxide or molybdenum oxide, immersing metal oxide particles into the sol, separating them from the sol, and drying or firing them. According to this method, the catalyst can be supported on the surfaces of metal oxide particles even if the surfaces of the metal oxide particles are free of bases. Therefore, this method can be applied to a wide variety of metal oxide particles.

The amount of catalyst supported can be appropriately selected according to the amount of carbon nanotubes to be grown. Furthermore, at least one element of Cr, Mn, Fe, Co, Ni, Cu, Zn, In, Sn, Al and Pt is supported in the amount of preferably 0.1 to 1000 moles per mole of elemental Mo, and more preferably 1 to 100 moles per mole of elemental Mo.

An example of a method of forming and growing carbon nanotubes on the surfaces of metal oxide particles supporting the catalyst is a CVD method. Examples of the CVD method that can be used in this case include not only those using a mixture gas containing a hydrocarbon gas generally used for manufacturing of carbon nanotubes, such as ethane, ethylene or acetylene, and an inert gas, such as nitrogen, helium or argon, but also those using a hydrocarbon compound which is liquid at ordinary temperature, such as ethanol or toluene, and those using a hydrocarbon compound which is solid at ordinary temperature, such as polystyrene. These methods using liquid or solid hydrocarbon are preferred as methods for synthesizing a large quantity of carbon nanotubes rather than other methods. For example, metal oxide particles supporting carbon nanotubes can be synthesized by mixing catalyst-supporting wollastonite having a nickel oxide-molybdenum oxide catalyst supported thereon with polystyrene resin powder and heating the mixture to 700°C under a nitrogen gas atmosphere. The mixture ratio of polystyrene to wollastonite in this case can be 0.01 or more of polystyrene relative to 1 of wollastonite. However, from the standpoint of efficiency, the mixture ratio of polystyrene is desirably 0.1 to 10, and the CVD temperature is desirably 500°C to 1000°C.

Alternatively, carbon nanotubes can be formed and grown by a combustion method. Specifically, a hydrocarbon gas is incompletely combusted and metal oxide particles supporting a catalyst are brought into contact with the flame of the incomplete combustion to use the combustion gas as a source of carbon and heat the metal oxide particles supporting a catalyst by combustion heat, whereby carbon nanotubes are formed on the surfaces of the metal oxide particles. For example, catalyst-supporting wollastonite is prepared which has a nickel oxide-molybdenum oxide catalyst supported thereon, and the prepared wollastonite is brought into contact with flame obtained by combusting an air/ethylene gas mixture having a volume ratio of 10 or less, preferably 7 or less, with a gas burner for one minute or more, preferably about 15 minutes, whereby carbon nanotubes can be formed on the surface of wollastonite. The temperature during the combustion is preferably 500°C to 1000°C, more preferably 500°C to 900°C, and still more preferably 600°C to 800°C. After the formation of carbon nanotubes, carbon nanotubes formed on the surfaces of the metal oxide particles may combust if they come into contact with the air upon departure from the contact with the metal oxide particles while they are kept at high temperatures. Therefore, it is desirable to cool the metal oxide particles with carbon nanotubes while keeping out the air until they reach 500°C or below or to cool them by contact with an inert gas, such as nitrogen, argon or helium.

With the use of the CVD method, polymers can be used as a source of carbon.

In forming carbon nanotubes by the combustion method, it is preferable to form carbon nanotubes by heating the metal oxide particles by a combustion reaction between hydrocarbon and oxygen-containing gas and concurrently bringing the metal oxide particles into contact with hydrocarbon and/or carbon monoxide.

In the present invention, the length of supported carbon nanotubes in a direction substantially perpendicular to the surface of the metal oxide is preferably 1 to 1000 µm, more preferably 1 to 500 µm, and still more preferably 5 to 100 µm.

In the present invention, the amount of carbon nanotubes attached to the surface of each of the metal oxide particles by supporting them thereon can be controlled by the amount of catalyst supported, the amount of inert gas supplied, the kind and amount of hydrocarbon, and the reaction temperature and time. Also in the combustion method, the amount of carbon nanotubes attached can be controlled by the amount of catalyst supported, the amount of combustion gas, the air-fuel ratio, and the reaction temperature and time.

The amount of carbon nanotubes attached can be determined, for example, by a thermal analysis. Specifically, the amount of carbon nanotubes attached can be determined by conducting a thermal analysis and, for example, calculating the weight loss on heating up to about 800°C.

Examples of the metal oxide particles on which carbon nanotubes are to be supported in the present invention include, as described above, fibrous or platy potassium titanate and wollastonite. Other kinds of such metal oxide particles include mica, talc, glass flakes, platy hydrotalcite, platy boehmite, platy alumina, glass fibers, ceramic fibers, fibrous aluminum borate and fibrous titanium oxide. However, the kind of the metal oxide particles in the present invention is not limited to these materials.

In the present invention, carbon nanotubes are manufactured by removing metal oxide particles from the metal oxide particles supporting carbon nanotubes as described above.

Examples of a method of removing the metal oxide particles include, as described previously, an acidic treatment and an alkaline treatment. In the acidic treatment, an inorganic acid, such as nitric acid, hydrochloric acid or sulfuric acid, or an organic acid, such as acetic acid, can be used. The acid concentration can be appropriately selected according to the amount of metal oxide particles to be treated, the kind of acid and other factors. Generally, the acid concentration is preferably about 0.1 to about 10 N.

The acidic treatment can be implemented by bringing the metal oxide particles supporting carbon nanotubes into contact with an acidic solution. Specifically, the treatment can be implemented by adding the metal oxide particles supporting carbon nanotubes to the acidic solution and allowing them to react with the solution for a predetermined time. Generally, the temperature of the acidic solution is preferably about 0°C to about 90°C. The time of the acidic treatment is generally preferably about one minute to about 48 hours.

Examples of alkali used in the alkaline treatment include sodium hydroxide and potassium hydroxide. The concentration of the alkali solution can be appropriately selected according to the amount of metal oxide particles to be treated, the kind of alkali and other factors. Generally, the concentration is preferably about 0.1 to about 10 N. An example of a method of performing the alkaline treatment is a method of bringing the metal oxide particles supporting carbon nanotubes into contact with an alkaline solution. Specifically, the treatment can be implemented by adding the metal oxide particles supporting carbon nanotubes to the alkaline solution. The temperature of the alkaline solution is generally preferably within the range from 0°C to 90°C. The time of the alkaline treatment is generally preferably one minute to 48 hours.

The metal oxide particles are dissolved and removed in a solution by the acidic treatment and/or the alkaline treatment, and carbon nanotubes are then separated from the solution by filtration, rinsed if necessary, and then dried, whereby carbon nanotubes can be obtained.

In relation to the acidic treatment and alkaline treatment for the removal of metal oxide particles, only the acidic treatment, only the alkaline treatment or both the acidic and alkaline treatments can be selectively performed according to the kind of metal oxide particles used. If both the acidic and alkaline treatments are performed, the alkaline treatment may be performed after the completion of the acidic treatment, or the acidic treatment may be performed after the completion of the alkaline treatment. If the metal oxide particles are of wollastonite, the alkaline treatment is preferably performed after the completion of the acidic treatment.

The carbon nanotubes according to the present invention are those oriented in one direction and take the form of a plate-like aggregate, which makes them easy to handle as powder. In addition, the carbon nanotubes have a low bulk specific gravity and can therefore be easily compounded into resin or paint. Hence, the carbon nanotubes of the present invention can be applied to an additive to resins and paints and an electrode material for batteries and capacitors.

### Examples

Hereinafter, the present invention will be described in more detail with reference to examples. However, the present invention is not limited at all by the examples and can be appropriately modified without changing the spirit of the invention.

### <Preparation of Catalyst-Supporting Wollastonite>

An amount of 500 ml of water was added to 10 g of wollastonite (NYGLOS 5 having a fiber diameter of 5 µm and a fiber length of 50 µm) and well stirred, thereby preparing a dispersed slurry.

An amount of 5.4 g of nickel nitrate (special grade chemical) was added to 500 mL of water and dissolved therein. An amount of 0.7 g of ammonium molybdate (special grade chemical) was added to the resultant solution and dissolved therein. The solution (catalyst liquid) was added to the slurry.

The slurry was stirred for an hour, allowed to stand, then rinsed in water three times by decantation and then filtered.

The obtained cake was dried at 120°C for an hour and ground in a mortar, thereby obtaining wollastonite having a catalyst supported thereon.

### <Preparation of Wollastonite Supporting Carbon Nanotubes>

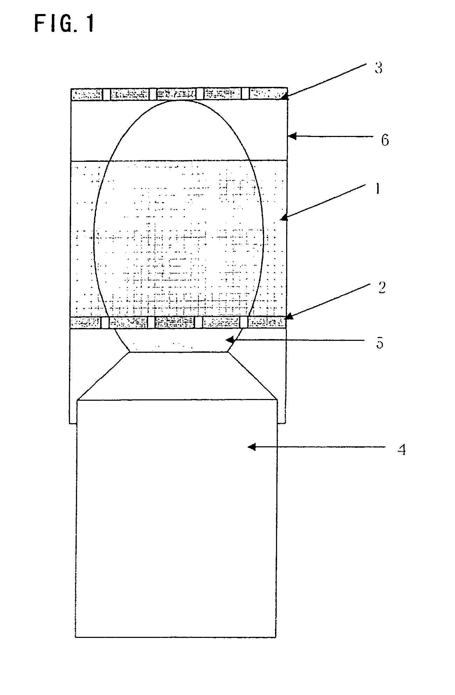

An amount of 0.5 g of the obtained catalyst-supporting wollastonite was put into a stainless steel mesh container 1 in an apparatus shown in FIG. 1, and carbon nanotubes (CNT) were formed on the surface of wollastonite. The top, bottom and peripheral sides of the container 1 are made of stainless steel mesh, and pored stainless steel plates 2 and 3 are disposed below and above the container 1, respectively. A burner 4 is placed below the stainless steel plate 2. Catalyst-supporting wollastonite in the container 1 can be exposed to flame 5 from the burner 4.

The container 1 and the stainless steel plates 2 and 3 are inserted into a stainless steel tube 6.

Ethylene and air were supplied to the burner 4 at 1.75 L/min and 10 L/min, respectively, and catalyst-supporting wollastonite was exposed to flame 5 from the burner 4 for 20 minutes. Then, the gas to be supplied to the burner 4 was changed to nitrogen gas at 10 L/min, and the wollastonite was cooled by the nitrogen gas for two minutes. The obtained product weighed 3.1 g. Its bulk volume was 100 mL/g.

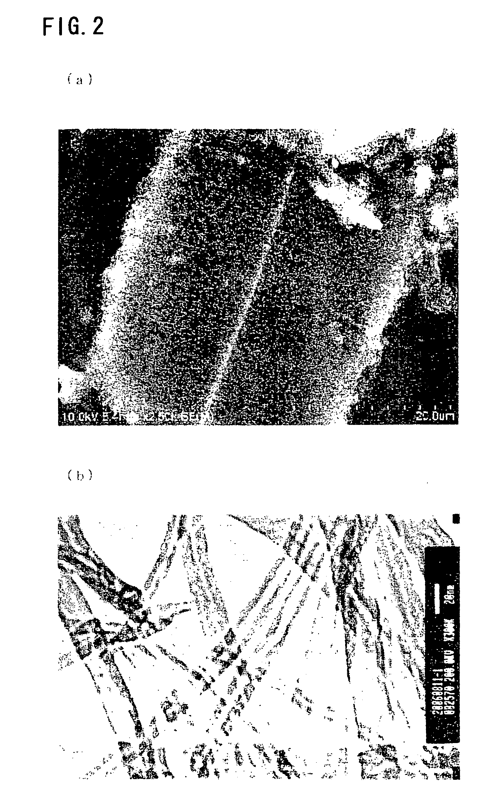

The obtained product was observed using a scanning electron microscope (S-4800 manufactured by Hitachi, Ltd.) and a transmission electron microscope (JEM-2010 manufactured by JEOL Ltd.). FIG. 2 is a scanning electron micrograph (a) and a transmission electron micrograph (b) both showing the obtained product.

FIG. 2 (a) is a scanning electron microscope image (x 2500), from which it was observed that carbon nanotubes (CNT) were supported on the surface of wollastonite in a state where they were grown substantially perpendicularly to the surface of wollastonite and in parallel with each other. Furthermore, the carbon nanotubes grew symmetrically with respect to wollastonite and their overall structure had a planar plate-like shape. Observation with the scanning electron microscope has revealed that the measured length of carbon nanotubes on the surface of wollastonite in a direction substantially perpendicular to the surface of wollastonite was 5 to 50 µm.

FIG. 2 (b) is a transmission electron microscope image (x 300000), from which it can be seen that the carbon nanotubes formed and supported on the surface of wollastonite are those each having a hollow structure.

### <Thermal Analysis Test>

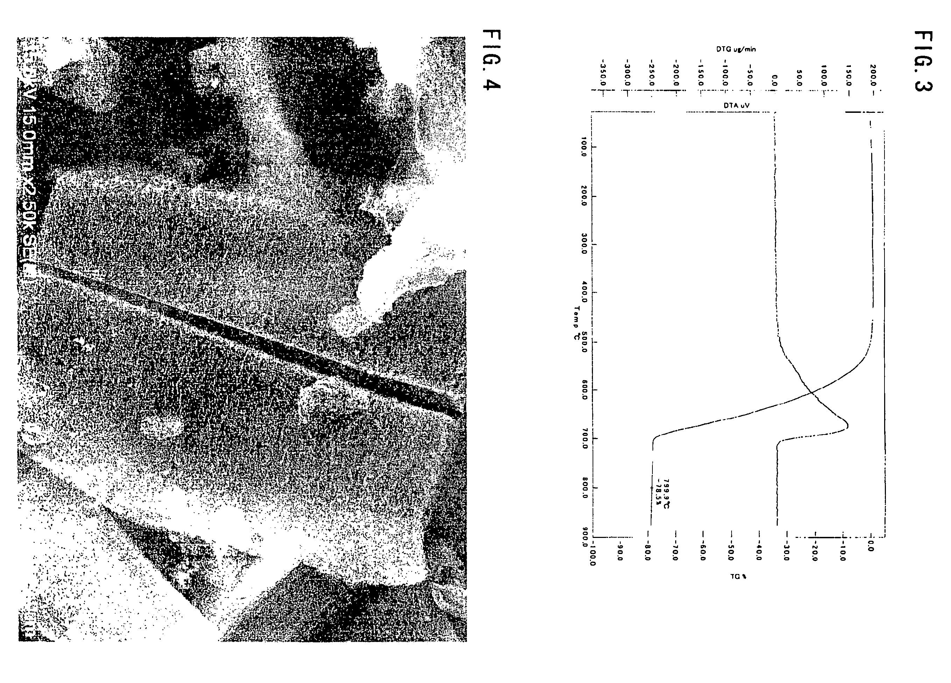

The obtained wollastonite supporting carbon nanotubes was subjected to a thermal analysis using a thermal analyzer (a thermal analyzer EXSTAR6000 TG/DTA6300 manufactured by Seiko Instruments Inc.). The results are shown in FIG. 3.

As shown in FIG. 3, it can be seen that the amount of carbon nanotubes in the wollastonite supporting carbon nanotubes is approximately 80% by weight.

### <Removal of Wollastonite from Wollastonite Supporting Carbon Nanotubes>

An amount of 200 g of the obtained wollastonite supporting carbon nanotubes was added to 25 L of 0.5 N nitric acid aqueous solution, and the aqueous solution was stirred for approximately two hours while the temperature thereof was kept at 30°C.

The aqueous solution after being stirred was filtered by a Buchner funnel, and the resultant filtered cake-like substance was rinsed in pure water. The obtained filtered cake-like substance was moved to a reaction container, and 25 L of 1 N sodium hydroxide aqueous solution was then put into the reaction container and stirred for approximately two hours while the temperature thereof was kept at 50°C.

The solution was filtered again by a Buchner funnel, and the resultant filtered substance was rinsed in 5 L of warm water at 50°C five times. The obtained filtered substance was dried at 120°C for 12 hours. Thus, 161 g of carbon nanotubes were obtained.

FIG. 4 is a scanning electron micrograph showing the obtained carbon nanotubes. As shown in FIG. 4, wollastonite having been located in the center no longer exists, which indicates that wollastonite was removed.

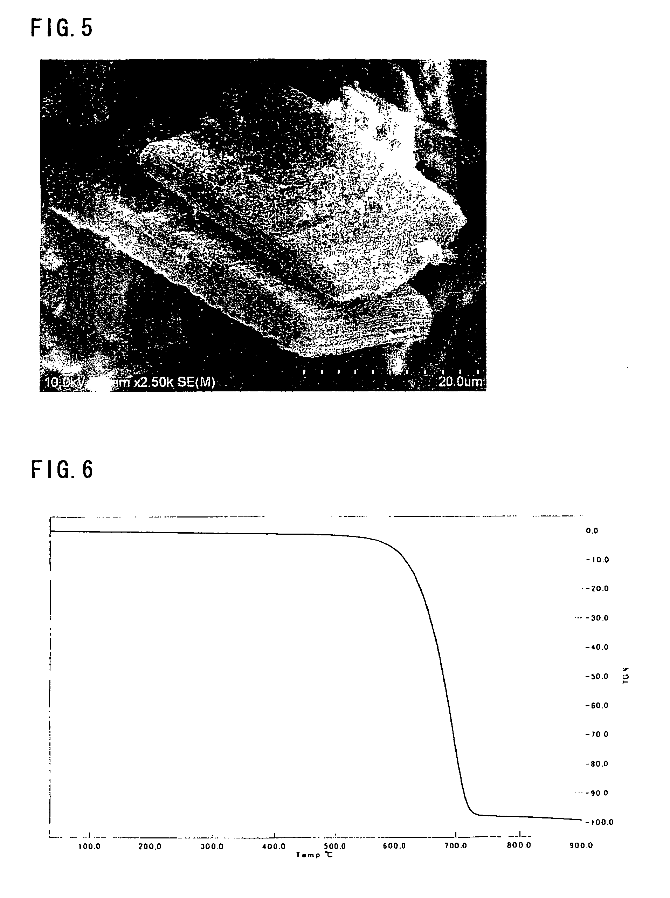

FIG. 5 is, like FIG. 4, a scanning electron micrograph showing the obtained carbon nanotubes. As is obvious from FIG. 5, it can be seen that carbon nanotubes from which wollastonite has been removed have a structure in which carbon nanotubes oriented in one direction are aggregated in the form of a plate. The thickness of carbon nanotubes aggregated in the form of a plate was 0.1 to 10 µm. The length of the carbon nanotubes in the direction of orientation was about 5 to about 50 µm.

The bulk density of the carbon nanotubes thus obtained was 0.01 g/mL. Since the bulk density of commercially available carbon nanotubes is about 0.03 g/mL, it can be seen that the bulk density of carbon nanotubes obtained by the present invention is very low. It can be assumed that the reason for this is that carbon nanotubes oriented in one direction are aggregated in the form of a plate.

### <Thermal Analysis Test>

The obtained carbon nanotubes were subjected to a thermal analysis in the same manner as described previously. The results are shown in FIG. 6.

As shown in FIG. 6, approximately 99% of the original weight is reduced by heat application, which indicates that wollastonite was removed and only carbon nanotubes were left.

As can be seen from the description so far, according to the present invention, carbon nanotubes oriented in one direction can be efficiently and easily manufactured.

It can also be seen that since carbon nanotubes obtained by the present invention take the form of an aggregate of carbon nanotubes oriented in one direction and have a low bulk specific gravity, they are easy to handle as powder.

### <Heat Treatment>

The obtained carbon nanotubes were subjected to heat treatment. The heat treatment was conducted under the conditions of a heat treatment temperature of 1500°C and a heat treatment time of three hours and under the conditions of a heat treatment temperature of 2700°C and a heat treatment time of three hours. Specifically, 21 g of carbon nanotubes were put into a graphite crucible having a diameter of 100 mm and a height of 100 mm, a graphite lid with a 5 mm diameter hole was then put on the graphite crucible, and the graphite crucible was placed in a carbon resistance furnace. The interior of the furnace was once evacuated, then increased in temperature up to 2700°C at a rate of temperature increase of 90°C/min while Ar gas was allowed to flow into the furnace at a rate of 1 L/min, then held at 2700°C for three hours and then allowed to cool naturally. The flow of inert gas, such as Ar gas, into the furnace allows impurities released from carbon nanotubes to be discharged to the outside of the furnace. The carbon nanotubes were taken out of the crucible and weighed. The weight was 20 g. Heat treatment to carbon nanotubes was also conducted at 1500°C in the same manner.

The impurities in carbon nanotubes before any heat treatment, the impurities in carbon nanotubes after being subjected to the heat treatment at 1500°C and the impurities in carbon nanotubes after being subjected to the heat treatment at 2700°C were quantitatively analyzed by inductively-coupled plasma atomic emission spectrometry (ICP-AES by NISSAN ARC, LTD.). The analysis results are shown in TABLE 1.

**[TABLE 1]**

| | Ca | Si | Fe | Ni | Mo |
|---|---|---|---|---|---|
| Before Heat Treatment | 0.22 % | 0.61% | 0.055% | 0.33% | 0.025% |
| After Heat Treatment at 1500°C | 0.083% | 0.28% | 0.055% | 0.32% | 0.025% |
| After Heat Treatment at 2700°C | Detection limit of below 10 ppm | 10ppm | Detection limit of below 10 ppm | Detection limit of below 10 ppm | Detection limit of below 10 ppm |

As shown in TABLE 1, it can be seen that the application of heat treatment reduces the impurities, such as Ca, Si, Fe, Ni and Mo. The concentration of impurities of the carbon nanotubes subjected to the heat treatment at 2700°C reaches the detection limit, which shows that high-purity carbon nanotubes can be obtained by the heat treatment.

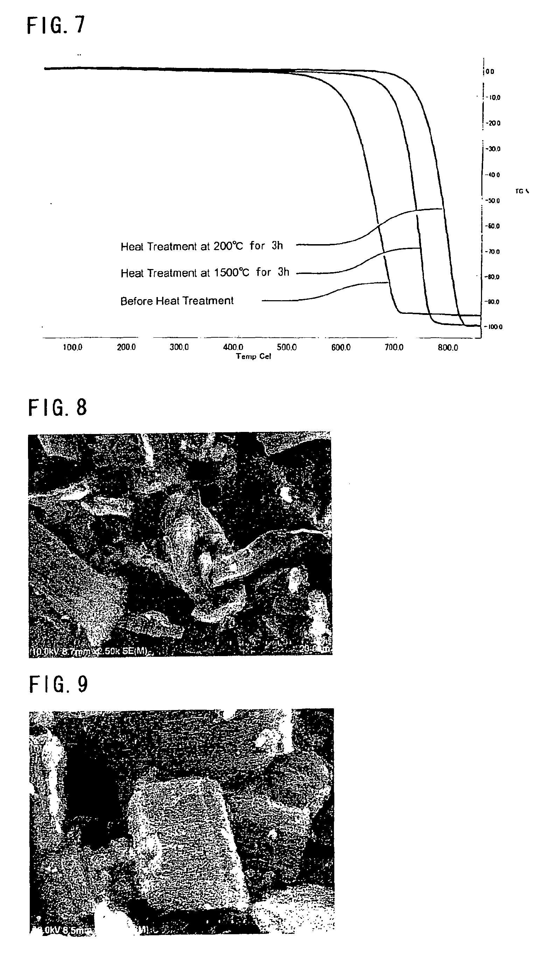

FIG. 7 shows a chart of thermogravimetric analysis measurement of carbon nanotubes before any heat treatment, carbon nanotubes subjected to the heat treatment at 1500°C and carbon nanotubes subjected to the heat treatment at 2700°C. As is obvious from FIG. 7, it can be seen that the thermal stability of carbon nanotubes is increased by the application of heat treatment.

Furthermore, FIG. 8 shows a scanning electron micrograph of carbon nanotubes before any heat treatment, and FIG. 9 shows a scanning electron micrograph of the carbon nanotubes after being subjected to the heat treatment at 2700°C. It can be seen from FIGS. 8 and 9 that also after the heat treatment the aggregate structure of the carbon nanotubes is held.

### <Manufacturing of Electrodes>

An amount of 10 parts by weight of the above carbon nanotubes subjected to the heat treatment at 2700°C for three hours were used as a conductive aid, 84 parts by weight of activated carbon and 6 parts by weight of polytetrafluoroethylene (PTFE) were added to the carbon nanotubes, and the mixture was kneaded in an agate mortar. The obtained mixture was subjected to roll pressing, thereby producing an electrode sheet with a thickness of 140 to 150 µm.

The electrode sheet was cut into two strips of 50 mm x 30 mm, and the strips were attached to their respective aluminum foils by a conductive adhesive to produce electrodes. A capacitor was produced using the produced electrodes and an electrolytic solution made of a propylene carbonate (PC) solution in which 1. 4 mol/L of triethyl methyl ammonium-tetrafluoroborate (TEMA-BF₄) was dissolved.

The capacitor initial resistance of the capacitor thus obtained was measured with an AC signal of 1 kHz using a digital multimeter. The measured capacitor initial resistance was approximately 120 mΩ, which was a low capacitor initial resistance value. Therefore, it has been confirmed that the carbon nanotubes obtained by the present invention are useful as a conductive aid or the like in electrodes including capacitor electrodes and lithium ion battery electrodes.

## Claims

1. A method for manufacturing carbon nanotubes, comprising the steps of:
bringing crystalline metal oxide particles into contact with a solution containing metal ions serving as a catalyst for forming carbon nanotubes, thereby attaching the catalyst to the surfaces of the metal oxide particles;
subjecting the surfaces of the metal oxide particles to which the catalyst is attached to a CVD method or a combustion method, thereby forming carbon nanotubes on the surface of each of the metal oxide particles and resulting in producing metal oxide particles each supporting carbon nanotubes grown substantially perpendicularly to the surface of the metal oxide particle and in parallel with each other; and
removing metal oxide particles from the metal oxide particles supporting carbon nanotubes.

2. The method for manufacturing carbon nanotubes according to claim 1, wherein the combustion method is a method in which the metal oxide particles to which the catalyst is attached are heated to 500°C to 1000°C and the heated metal oxide particles are brought into contact with hydrocarbon and/or carbon monoxide.

3. The method for manufacturing carbon nanotubes according to claim 1 or 2, wherein the crystalline metal oxide particles are made of an alkaline earth metal silicate, an alkaline earth metal titanate or an alkali titanate.

4. The method for manufacturing carbon nanotubes according to claim 1 or 2, wherein the crystalline metal oxide particles are made of wollastonite.

5. The method for manufacturing carbon nanotubes according to any one of claims 1 to 4, wherein the step of removing the metal oxide particles is the step of subjecting the metal oxide particles supporting carbon nanotubes to an acid treatment or an alkaline treatment.

6. The method for manufacturing carbon nanotubes according to any one of claims 1 to 5, wherein the carbon nanotubes are grown in a plate-like aggregate.

7. The method for manufacturing carbon nanotubes according to any one of claims 1 to 6, wherein the length of the carbon nanotubes in a direction of growth is 1 to 1000 µm.

8. The method for manufacturing carbon nanotubes according to any one of claims 1 to 7, wherein the obtained carbon nanotubes are subjected to a heat treatment at a temperature within the range from 1000°C to 3200°C.

9. Carbon nanotubes manufactured by the method according to any one of claims 1 to 8.
